(19) Europäisches Patentamt / European Patent Office / Office européen des brevets

(11) **EP 1 587 627 B1**

(12) **EUROPÄISCHE PATENTSCHRIFT**

(45) Veröffentlichungstag und Bekanntmachung des Hinweises auf die Patenterteilung:
**20.05.2009 Patentblatt 2009/21**

(21) Anmeldenummer: **04704589.3**

(22) Anmeldetag: **23.01.2004**

(51) Int Cl.:
***B01L 3/02*** *(2006.01)*      ***B01J 19/00*** *(2006.01)*

(86) Internationale Anmeldenummer:
**PCT/EP2004/000565**

(87) Internationale Veröffentlichungsnummer:
**WO 2004/065011 (05.08.2004 Gazette 2004/32)**

(54) **VERFAHREN ZUR BEFÜLLUNG VON PROBENTRÄGERN**

METHOD FOR FILLING SAMPLE CARRIERS

PROCÉDÉ POUR REMPLIR DES PORTE-ECHANTILLONS

(84) Benannte Vertragsstaaten:
**AT BE BG CH CY CZ DE DK EE ES FI FR GB GR HU IE IT LI LU MC NL PT RO SE SI SK TR**

(30) Priorität: **23.01.2003 DE 10302464**

(43) Veröffentlichungstag der Anmeldung:
**26.10.2005 Patentblatt 2005/43**

(73) Patentinhaber: **Evotec AG**
**22525 Hamburg (DE)**

(72) Erfinder: **PRECKEL, Hartwig**
**21029 Hamburg (DE)**

(74) Vertreter: **von Kirschbaum, Alexander**
**Patent Attorneys von Kreisler Selting Werner,**
**Deichmannhaus am Dom,**
**Bahnhofsvorplatz 1**
**50667 Köln (DE)**

(56) Entgegenhaltungen:
**US-B1- 6 296 811      US-B1- 6 367 925**

**Beschreibung**

Die Ereindung betrifft ein Verfahren zur Befüllung von Probenträgern mit chemischen und/oder biologischen Flüssigkeiten.

Beim Dispensieren und Pipettieren von Flüssigkeitsmengen im Bereich weniger Nanoliter bis Mikroliter werden mit Hilfe von Flüssigkeitsabgabevorrichtungen, insbesondere Mikropumpen, Tropfen mit sehr geringem Volumen durch eine Düse ausgestoßen. Die Tropfen werden in der Regel in einem sehr kleinen Zielbereich, z.B. einer Vertiefung (weil) in einer Mikrotiterplatte oder einem Bereich eines Objektträgers, gesammelt. Die Dosiermenge wird über die Anzahl der ausgestoßenen Tropfen von sehr kleinem Volumen, i.a. in der Größenordnung von Picolitern, bestimmt. Eine übliche Technik ist die Verwendung von Mikropumpen mit einem Piezo-Aktor. Derartige Flüssigkeitsabgabevorrichtungen weisen eine Pumpenkammer auf, bei der zumindest eine Seitenwand flexibel als Membran ausgebildet ist. Auf die Membran und damit die Flüssigkeit kann durch den Piezo-Aktor ein Druckimpuls ausgeübt werden. Durch die hierdurch erzeugte Druckerhöhung in der Pumpenkammer wird durch eine Austrittsdüse ein Tröpfchen ausgestoßen. Die Pumpenkammer ist üblicherweise mit einem Flüssigkeitsreservoir verbunden. Bei Dispensiervorrichtungen ist in dem Flüssigkeitsreservoir die abzugebende Probenflüssigkeit enthalten. Bei Pipettiervorrichtungen, bei denen die abzugebende Probenflüssigkeit vor der Abgabe durch die Pipettierspitze aufgesaugt und anschließend abgegeben wird, ist in dem Flüssigkeitsreservoir üblicherweise eine Systemflüssigkeit enthalten.

Prinzipbedingt sind diese Pumpen sehr störanfällig. Für die Verwendung in unbeaufsichtigten automatischen Anlagen, z.B. im Medium- oder Hochdurchsatz-Screening, ist ein zuverlässiger Betrieb der Pumpen jedoch unerläßlich. Störungen müssen daher vermieden werden. Ein häufiges Problem beim Betrieb von Mikropumpen sind Verschmutzungen, wie Ablagerungen oder Benetzungen an der Austrittsdüse durch Komponenten der dispensierten Reagenzien. Ablagerungen oder Benetzungen an der Austrittsöffnung bewirken eine Änderung der Strahlrichtung und damit in der Regel eine Fehlbefüllung des Probenträgers. Sie können durch Reinigung bzw. Abtupfen der Düse behoben werden. Dies ist jedoch äußerst zeitaufwändig. Ferner ist dieser Fehler nur sehr schwer automatisch zu detektieren, insbesondere wenn in einer Anlage auf kleinem Raum sehr viele Pumpen gleichzeitig verwendet werden. Um einen robusten unbeaufsichtigten Betrieb zu erreichen, muss das Auftreten dieses Fehlers daher verhindert werden.

Als Anregungssignal für den Piezo-Aktor wird üblicherweise eine periodische Folge von Rechteck- oder ähnlichen treppen- oder trapezförmigen Impulsen verwendet. Bei jedem Impuls wird ein Tropfen ausgestoßen.

Die in Flüssigkeitsabgabevorrichtungen zum Befüllen von Vertiefungen (wells) eines Probenträgers eingesetzten Mikropumpen werden im Allgemeinen im Dauer- bzw. Burst-Betrieb betrieben. Beim Burst-Betrieb werden über einen längeren Zeitraum kontinuierlich Tropfen abgegeben, indem der Piezo-Aktor periodisch angeregt wird. Ein Burst ist somit eine Gruppe von mehreren Tröpfchen (Tröpfchenserie), die in kurzer zeitlicher Abfolge abgegebene werden, wobei nach einem Burst eine zeitlich längere Pause ist, bevor der nächste Burst durchgeführt wird. Bei einem Burst handelt es sich somit um eine Tröpfchenserie, wobei ein Flüssigkeitsabgabeschritt mehrere Tröpfchenserien aufweisen kann. Innerhalb eines Bursts erfolgt somit kein Ausschwingen der Mikropumpe bzw. der Flüssigkeitsabgabevorrichtung. In der Pause zwischen zwei ggf. mehrere Bursts umfassende Flüssigkeitsabgabeschritten erfolgt beispielsweise ein Positionieren der Dispensier- oder Pipettiervorrichtung über eine nächste Vertiefung (well) einer Mikrotiterplatte durch Bewegen der Flüssigkeitsabgabevorrichtung und/oder der Titerplatte. Ein Burst ist beispielsweise 0,1 bis 1 sec. lang. Innerhalb eines Bursts werden, beispielsweise beim Füllen von wells; etwa 20 bis 1000 Tropfen abgegeben. Hierbei wird das abgegebene Gesamtvolumen durch die Anzahl der Tropfen, die der Anzahl der vom Piezo-Aktor auf die Pumpenkammer abgegebenen Impulse entspricht, bestimmt.

Prinzipiell ist auch eine Einzeltropfenabgabe möglich. Hierdurch kann eine äußerst kleine, exakt dosierte Flüssigkeitsmenge abgegeben werden.

Untersuchungen haben ergeben, dass insbesondere im Burst-Betrieb beim Start und vor allem am Ende einer Impulsfolge die Gefahr der Benetzung der Düse besteht. Durch die Benetzung wird die Strahlrichtung beim folgenden Burst verändert. Ein Eintrocknen der Benetzung führt zu Ablagerungen der gelösten Substanzen um die Düsenöffnung herum. Das führt ebenfalls zu einer instabilen Strahlrichtung oder einem Ausfall der Flüssigkeitsabgabevorrichtung.

Die Neigung zur Benetzung der Düsenaußenflächen kann durch eine hydrophobe Beschichtung der Düse verringert werden. Ein bekanntes Verfahren ist die Silanisierung der Glasflächen der Düse. Eine hydrophobe Beschichtung der Düse hat jedoch die Nachteile, dass die Wirkung auf hydrophile Reagenzien beschränkt ist, Probleme mit der Adhäsion von Reagenzien bei geringen Konzentrationen auftreten, die Beschichtung insbesondere bei häufigem Spülen und Abtupfen nicht langzeitstabil ist, eine hydrophobe Beschichtung die Meniskusbildung in der Düsenöffnung stören und damit zu instabilem Betrieb führen kann.

Eine weitere Möglichkeit die Benetzung der Düse zu minimieren ist eine möglichst spitze Form der Düse zu wählen, um die benetzbare Oberfläche klein zu halten. Eine sehr spitze Form der Düse, um die benetzbare Oberfläche zu minimieren, hat jedoch die Nachteile, dass die mechanische Stabilität verringert ist, die Herstellung schwieriger und teuer ist und es technisch nicht möglich ist, die benetzbare Oberfläche so klein zu machen, dass gar keine Flüssigkeit mehr haften bleibt.

Aufgabe der Erfindung ist es, ein Verfahren zur Befüllung von Probenträgern zu schaffen, bei dem die Gefahr der Bildung von Ablagerungen oder Benetzungen an der Austrittsdüse einer Flüssigkeitsabgabevorrichtung verringert ist.

Die Lösung der Aufgabe erfolgt erfindungsgemäß durch die Merkmale des Anspruchs 1 bzw. 3.

Es wurde herausgefunden, dass die Neigung zur Benetzung der Düse beim Start der Anregungsimpulsfolge auf der Tatsache beruht, dass z.B. der Dispenser noch nicht eingeschwungen ist, und der Tropfen dadurch mit geringerem Impuls abgeschossen wird. Ferner wurde herausgefunden, dass die Neigung zur Benetzung der Düse beim Beenden der Anregungsimpulsfolge auf ein Nachschwingen des Dispensers zurückzuführen ist. Dabei wird Flüssigkeit aus der Düse gedrückt, die aber nicht mehr als Tropfen abgegeben wird. Diese Flüssigkeit wird entweder in die Düse zurückgezogen oder benetzt durch Adhäsionskräfte die Düsenaußenfläche.

Bei einer ersten erfindungsgemäßen Ausführungsform des Verfahrens zur Befüllung von Vertiefungen eines Probenträgers wird die durch das Nachschwingen hervorgerufene Benetzung bzw. Ablagerung verringert bzw. vollständig beseitigt. Bei dem erfindungsgemäßen Verfahren wird in einem Positionierschritt die Flüssigkeitsabgabevorrichtung, d. h. der Dispenser, über einer ersten Vertiefung (well) positioniert, wobei das Positionieren durch Bewegen der Flüssigkeitsabgabevorrichtung und/ oder des Probenträgers erfolgt. Die Flüssigkeitsabgabevorrichtung weist eine Flüssigkeitskammer auf, wobei auf die Flüssigkeitskammer durch einen Impulsgeber eingewirkt und durch einen Anregungsimpuls Töpfchen erzeugt werden. Die Tröpfchen werden vorzugsweise durch einen in dem Dispenser vorgesehenen Kapillarkanal in Richtung der Vertiefung abgegeben. Nach dem Positionierschritt erfolgt ein Flüssigkeitsabgabeschritt indem durch Aktivieren des Impulsgebers mehrere Tröpfchen in die erste Vertiefung abgegeben werden. Hierbei umfasst ein Flüssigkeitsabgabeschritt mindestens eine Tröpfchenserie, in der mehrere Tröpfchen abgegeben werden. Anschließend erfolgt ein Wiederholen des Positionierschrittes in dem die Flüssigkeitsabgabevorrichtung über einer weiteren Vertiefung positioniert wird und in dem sich daran anschließendem Flüssigkeitsabgabeschritt diese Vertiefung durch Abgabe mehrerer Tröpfchen in einer oder mehreren Tröpfchenserien gefüllt wird. Der Positionierschritt und der sich hieran anschließende Flüssigkeitsabgabeschritt wird mehrfach zur Befüllung sämtlicher gewünschter Vertiefungen wiederholt. Zur Vermeidung von Benetzungen und Ablagerungen durch das Nachschwingen der Flüssigkeitsabgabevorrichtung, wird mit dem erfindungsgemäßen Verfahren am Ende der Tröpfchenserie von dem Impulsgeber ein Dämpfungsimpuls erzeugt. Erfindungsgemäß werden somit einerseits durch Anregungsimpulse eine Vielzahl von Tröpfchen (Burst) erzeugt, wobei die Flüssigkeitsabgabevorrichtung in Schwingungen versetzt wird. Diese Schwingungen werden am Ende des Bursts bzw. der Tröpfchenserie durch mindestens einen Dämpfungsimpuls erfindungsgemäß gedämpft. Hierbei erfolgt der Dämpfungsimpuls, beispielsweise am Ende eines Tröpfchenabgabezykluses, insbesondere im Bereich der letzten Tröpfchenabgabe und besonders bevorzugt unmittelbar nach der letzten Tröpfchenabgabe. Durch die Wahl des Zeitpunktes, zu dem der Dämpfungsimpuls erzeugt wird, kann die Schwingung der Flüssigkeitsabgabevorrichtung erheblich gedämpft werden. Dies hat zumindest ein Verringern oder sogar vollständiges Vermeiden der Gefahr von Benetzungen zur Folge.

Bei einer zweiten bevorzugten Ausführungsform des erfindungsgemäßen Verfahrens erfolgt ein Verringern der Gefahr von Ablagerungen bzw.

Benutzungen beim Start einer Anregungsimpulsfolge. Hierzu wird erfindungsgemäß zur Beginn der Tröpfchenserie ein Vorimpuls erzeugt, der zeitlich den Anregungsimpulsen vorgelagert ist. Erfindungsgemäß ist die Amplitude des Vorimpulses größer als diejenige des Anregungsimpulses. Dadurch wird der erste Tropfen schon mit einem hohen Impuls abgeschossen und dadurch die Gefahr der Benetzung der Düse verringert. Bei einem relativ schwachen ersten Impuls, der z.B. den übrigen Anregungsimpulsen entspricht, kann eine Benetzung der Düse erfolgen, da ein Teil des ersten Tropfens an der Düse hängen bleiben kann. Dies ist durch einen erhöhten ersten Impuls ausgeschlossen. Ein dauerhafter Betrieb mit einer hohen Amplitude würde dagegen zum Ausfall des Dispensers führen, da durch die große Amplitude beim Zurückschwingen der Flüssigkeitssäule Luft durch die Düse in die Dispenserkammer gezogen würde.

Das Vorsehen eines Vorimpulses mit höherer Amplitude hat ferner den Vorteil, dass auch das Volumen des ersten Tropfens im Wesentlichen die selbe Größe hat wie die Volumina der von späteren Anregungsimpulsen erzeugten Tropfen. Bei konstanter Amplitude wäre das Volumen des ersten Tropfens geringer, da das System noch nicht eingeschwungen ist.

Besonders bevorzugt ist es, die beiden vorstehend beschriebenen erfindungsgemäßen Verfahren zu kombinieren, so dass sowohl ein Vorimpuls als auch ein Dämpfungsimpuls vorgesehen ist. Durch das Vorsehen des Dämpfungsimpulses kann ein Auftreten von Ablagerungen oder Benetzungen an der Austrittsdüse verringert oder sogar vollständig vermieden werden. Hierdurch ist ein Ausfall der Flüssigkeitsabgabevorrichtung oder ein erforderliches Reinigen nicht oder nur erheblich seltener der Fall. Insbesondere ist die Strahlrichtung, d.h. die Abgaberichtung der Flüssigkeitströpfchen, durch Einsatz des erfindungsgemäßen Verfahrens nicht mehr beeinträchtigt, so dass insbesondere beim Befüllen von Vertiefungen einer Mikrotiterplatte o.dgl., die sehr kleine Querschnittsöffnungen aufweisen, sichergestellt, dass die abgegebene Flüssigkeit auch in die entsprechende Vertiefung gelangt. Diese Vorteile werden durch die Kombination der beiden erfindungsgemäßen Verfahren, d.h. durch Vorsehen eines Vorpulses und eines Dämpfungsimpulses, noch verbessert.

Ferner sind sehr kurze Burstlängen bzw. Betriebszyklen mit ggf. kurzen Pausenzeiten möglich. Insbesondere auf Grund des erfindungsgemäßen Vorsehens eines Dämpfungsimpulses ist die Nachschwingzeit des Systems erheblich verringert. Hierdurch ist es möglich, die Pausenzeiten zwischen zwei Betriebszyklen bzw. Bursts erheblich zu verringern. Derartige Betriebszustände sind ohne das Vorsehen eines Dämpfungsimpulses und/oder eines Vorimpulses instabil. Dadurch können z.B. Reagenzien in eine wenige Mikroliter große Vertiefung mit sedimentierten Zellen gegeben werden, ohne die gleichmäßige Verteilung der Zellen auf dem Boden der Vertiefung zu verändern. Das ist für das Auslesen bzw. Untersuchen von Assays mit Suspensionszellen wichtig.

Vorzugsweise wird der Dämpfungs- und/oder der Vorimpuls von dem Impulsgeber der Flüssigkeitsabgabevorrichtung erzeugt, der auch die Anregungsimpulse zur Tröpfchenabgabe erzeugt.

Besonders bevorzugt ist es bei dem erfindungsgemäßen Verfahren, das - System, d.h. im Wesentlichen die Flüssigkeitsabgabevorrichtung, in Resonanzfrequenz zu betreiben. Insbesondere innerhalb eines Bursts werden die Anregungsimpulse vorzugsweise in einem zeitlichen Abstand abgegeben, der auf die Resonanzfrequenz des Systems abgestimmt ist. Der neue Anregungsimpuls ist somit mit dem ersten Nachschwingen des Systems synchronisiert. Die Eigenschwingung des Systems wird somit ausgenutzt. Das Betreiben in Resonanzfrequenz hat ferner den Vorteil, dass auch innerhalb eines Bursts das Benetzen der Düse durch Probenflüssigkeit vermieden ist, da eine Benetzung frühestens beim ersten Nachschwingen auftreten könnte und dieses Nachschwingen erfindungsgemäß bereits zum Ausstoßen des nächsten Tröpfchens genutzt wird. Beim Betreiben des Systems in Resonanzfrequenz werden die Anregungsimpulse somit in Abhängigkeit der Resonanzfrequenz des Systems in einem konstanten zeitlichen Abstand t erzeugt. Vorzugsweise wird der erfindungsgemäße Nachimpuls bei einem in Resonanzfrequenz betriebenen System im zeitlichen Abstand von t/2 zum letzten Anregungsimpuls erzeugt. Die Durchführung des Verfahrens bei der Resonanzfrequenz ermöglicht eine besonders schnelle Abgabe der Tropfen und damit die Anwendung im Hochdurchsatz-Screening.

Der Dämpfungsimpuls wird vorzugsweise im Wesentlichen nach der Abgabe des letzten Tröpfchens erzeugt. Besonders bevorzugt ist es, dass der Dämpfungsimpuls unmittelbar anschließend an den letzten Impuls der Tröpfchenabgabe, insbesondere innerhalb des nächsten Schwingungszyklus, erzeugt wird. Hierbei ist der Dämpfungsimpuls vorzugsweise entgegengesetzt der Nachschwing-Richtung der Flüssigkeitsabgabevorrichtung ausgerichtet. Bei einer beispielsweise sinusförmigen Anregung durch den Piezo-Aktor in der Resonanzfrequenz der Flüssigkeitsabgabevorrichtung und damit einem sinusförmigen Schwingen der Flüssigkeitsabgabevorrichtung bzw. des Systems ist der Dämpfungsimpuls somit vorzugsweise gegenphasig zur momentanen Schwingungsphase der Anregung bzw. wirkt der Schwingung der Vorrichtung entgegen.

Die Amplitude des Dämpfungsimpulses beträgt vorzugsweise mindestens 20 % und besonders bevorzugt mindestens 30 % der Amplitude der Anregungsimpulse. Besonders gute Ergebnisse konnten mit Amplituden im Bereich von 50 % der Amplitude des Anregungsimpulses erzielt werden.

Besonders bevorzugt ist es, die Länge des Dämpfungsimpulses in Abhängigkeit der Länge des Anregungsimpulses zu variieren, wobei eine Verbesserung der Ergebnisse durch eine Verlängerung der Dauer des Dämpfungsimpulses gegenüber dem Anregungsimpuls um vorzugsweise. 3 bis 15 %, besonders bevorzugt 5 bis 10 %, erzielt werden kann.

Die Amplitude des Vorimpulses ist vorzugsweise mindestens 20 % und besonders bevorzugt mindestens 50 % größer als die Amplitude des Anregungsimpulses. Die Wahl der Größe der Amplitude des Vorimpulses ist u.a. von der Viskosität der Flüssigkeit abhängig. Bei unterschiedlichen Flüssigkeiten konnten gute Ergebnisse mit der Erhöhung des Vorimpulses um 50 bis 100 % erzielt werden.

Insbesondere beim Medium- oder Hochdurchsatz-Screening werden zur Befüllung der einzelnen Vertiefungen in einem Anregungszyklus bzw. Burst mindestens 5, vorzugsweise mindestens 10 und besonders bevorzugt mindestens 20 Tröpfchen abgegeben.

Nachfolgend wird die Erfindung anhand bevorzugter Ausführungsformen unter Bezugnahme auf die anliegenden Zeichnungen näher erläutert.

Es zeigen:

Fig. 1      eine schematische Vorderansicht einer Flüssigkeitsabgabevorrichtung,

Fig. 2      eine schematische Schnittansicht entlang der Linie II-II in Fig. 1,

Fig. 3      eine schematische Vergrößerung einer Auslassöffnung der Flüssigkeitsabgabevorrichtung,

Fig. 4      eine schematische Darstellung eines Anregungs-Impulsverlaufs und

Fig. 5      ein konkretes Beispiel des Anregungs-Impulsverlaufs über die Zeit.

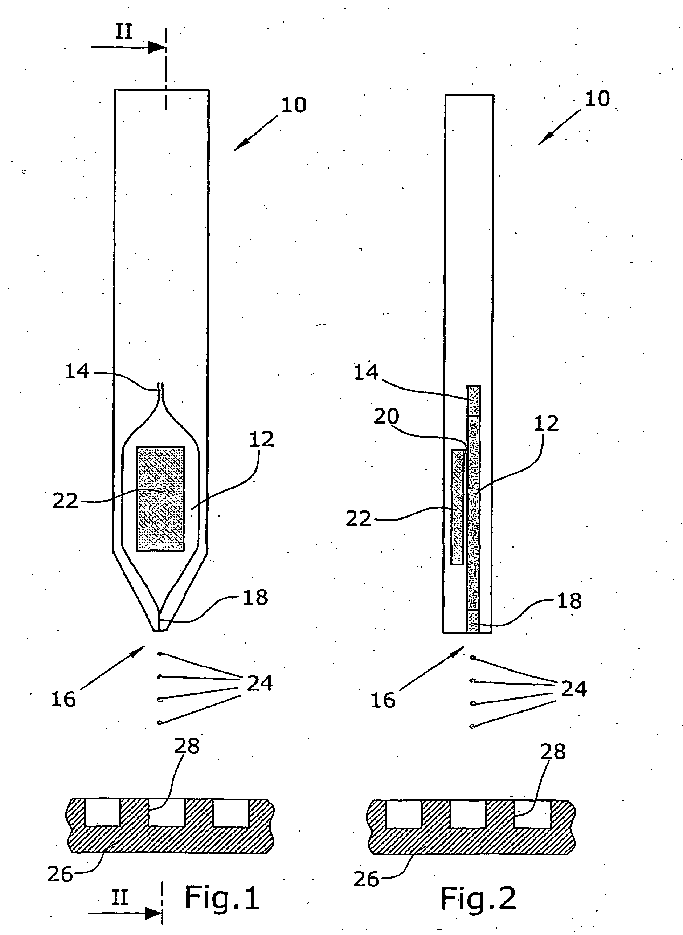

Eine Flüssigkeitsabgabevorrichtung 10 (Fign. 1 und 2) weist eine Flüssigkeitskammer 12 auf. Die Flüssigkeitskammer ist über einen Kanal 14 mit einem nicht dargestellten Vorratsbehälter verbunden. Die Flüssigkeitskammer weist einen in Richtung einer Austrittsöffnung 16 verlaufenden Austrittskanal 18 auf. Der Austrittskanal 18 ist vorzugsweise als Kapillarkanal ausgebildet.

Eine Rückwand 20 (Fig. 2) der Flüssigkeitskammer 12 ist flexibel, insbesondere als Membran, ausgebildet. Außerhalb der Flüssigkeitskammer 12 ist benachbart zu der Rückwand 20 ein Piezo-Aktor 22 angeordnet, der mit einer elektrischen Steuereinrichtung verbunden ist. Durch eine entsprechende Ansteuerung des Piezo-Aktors 22 werden kurze Impulse auf die Flüssigkeitskammer 12 übertragen. Hierdurch werden Tröpfchen 24 durch die Austrittsöffnung 16 ausgestoßen. Der Piezo-Aktor 22 dient somit als Impulsgeber, durch den in sehr kurzen zeitlichen Abständen Impulse auf die Flüssigkeitskammer 12 übertragen werden können.

Die Tröpfchen 24 werden in Richtung eines Probenträgers 26 abgegeben und dienen zur Befüllung von Vertiefungen bzw. wells 28 in dem Probenträger 26.

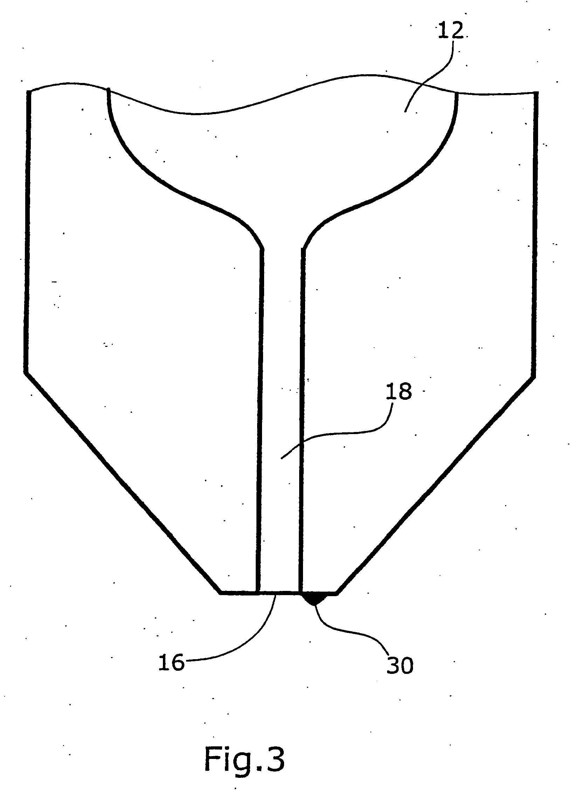

Derartige Flüssigkeitsabgabevorrichtungen, wie der in den Fign. 1 und 2 dargestellte Dispenser oder eine entsprechende Pipettiervorrichtung, werden erfindungsgemäß vorzugsweise im Bereich der Resonanzfrequenz betrieben. Hierbei wird die Flüssigkeitsabgabevorrichtung 10 auf Grund des mit hoher Frequenz betriebenen Piezo-Aktors 22 in Schwingungen versetzt. Nach Beendigen eines Tröpfchenabgabezykluses bzw. eines Anregungszykluses erfolgt ein Nachschwingen der Flüssigkeitsabgabevorrichtung 10. Durch dieses Nachschwingen treten geringe Flüssigkeitsmengen aus der Austrittsöffnung 16 (Fig. 3) aus. Hierdurch können Benetzungen oder Ablagerungen 30 im Bereich der Austrittsöffnung 16 entstehen. Entsprechende Ablagerungen oder Benetzungen 30 können auch dadurch entstehen, dass zu Beginn eines Anregungszykluses die Flüssigkeitsabgabevorrichtung die Tröpfchen 24 noch nicht mit genügend hoher Geschwindigkeit ausgestoßen werden, da die Flüssigkeitsabgabevorrichtung noch nicht eingeschwungen ist.

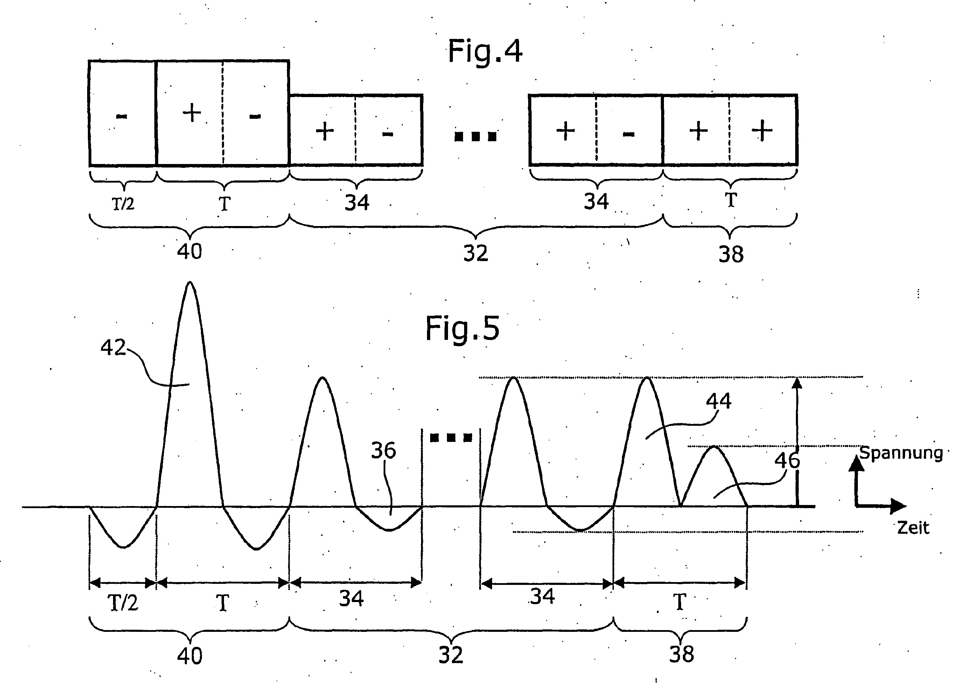

Um das Auftreten derartiger Ablagerungen oder Benetzungen 30 zu vermeiden oder das Risiko derartiger Ablagerungen zumindest zu verringern, werden die Impulse, mit denen der Piezo-Aktor 22 angesteuert wird, erfindungsgemäß, beispielsweise wie anhand der Fign. 4 und 5 dargestellt, erzeugt.

Innerhalb eines erfindungsgemäßen Anregungszykluses 32, d.h. innerhalb eines Burstvorgangs bzw. Flüssigkeitsabgabeschritts, in dem mehrere -Tröpfchen 24 zur Befüllung der Vertiefungen 28 kontinuierlich abgegeben werden, erfolgt eine kontinuierliche Erzeugung von Anregungsimpulsen 34 (Fig. 5). Hierbei besteht jeder Anregungsimpuls 34 beispielsweise aus einer sinusförmigen Welle der Amplitude A. Die negative Halbwelle 36 einer sinusförmigen Welle weist eine erheblich geringere Amplitude, beispielsweise 10 % der Amplitude A, auf. Die Frequenz $\frac{1}{T}$ entspricht der Resonanzfrequenz der Flüssigkeitsabgabevorrichtung 10. Die Flüssigkeitsabgabepumpe 10, wie sie im Medium- oder Hochdurchsatz-Screening eingesetzt wird, wird mit einer Frequenz von 3.000 bis 4.000 Hz betrieben.

Die Amplitude A beträgt 40 Volt. Das Sinussignal wird verwendet, um im System nur die Hauptmode anzuregen und Störungen durch höhere Moden zu vermeiden. Die Resonanzfrequenz wird verwendet, um mit einem kleinen Anregungssignal eine große Amplitude zu erreichen. Ferner ist dies nötig, damit auch in den Transienten eine bekannte Phasenbeziehung zwischen Anregungsignal und Membranschwingung besteht. Dadurch kann ein Dämpfungsimpuls 46 am Ende des Flüssigkeitsabgabeschrittes auf einfache Weise gegenphasig zum Anregungspuls 34 bzw. zur zweiten Halbwelle 36 erfolgen ohne die Membranschwingung messen oder berechnen zu müssen. Vorzugsweise wird eine asymmetrische Amplitude eingesetzt, um einerseits den Arbeitsbereich des Piezoelements und der Silzium-Membran gut auszunutzen, andererseits das Piezoelement nicht durch zu große negative Spannungen zu zerstören.

Ein Vorpuls, der zu Beginn des Flüssigkeitsabgabeschrittes erfolgt, ist ein normaler Anregungsimpuls mit einer um den Faktor 2 größeren Amplitude. Das Signal beginnt im dargestellten Ausführungsbeispiel mit der negativen Halbwelle, um eine größere Austrittsgeschwindigkeit des ersten Tropfens zu erreichen,

Vor dem Dämpfungsimpuls 46 ist eine erste Halbwelle 44 eines Anregungsimpulses vorgesehen. Die zweite Halbwelle (negative Halbwelle) ist durch eine positive Halbwelle, den Dämpfungsimpuls 46, mit einer 50 % kleineren Amplitude als die erste Halbwelle 44 ersetzt. Die zweite, positive Halbwelle dient somit als Dämpfungsimpuls 46. Da das System in Resonanz betrieben wird und sich im eingeschwungenen Zustand befindet, gewirkt dieser Dämpfungsimpuls 46 eine starke Dämpfung des Nachschwingens.

Insbesondere die Form des Vorimpulses 40 kann variiert werden, wobei ein rechteckförmiger Vorpuls vorteilhaft ist. Ebenso ist die Amplitude sowie die Länge des Vorimpulses 40 variierbar. Dies gilt auch für die Form des Dämpfungsimpulses 46 sowie für dessen Amplitudengröße und -länge.

Anstelle der Abgabe einer Vielzahl von Tröpfchen mit kleinem Volumen in ein well einer Mikrotiterplatte ist es auch möglich, das Volumen beispielsweise auf einen ebenen Objektträger abzugeben. Auf Grund des geringen Volumens bildet sich auf dem Objektträger ein auf diesem haftender Tropfen.

**Patentansprüche**

1. Verfahren zum Befüllen von Vertiefungen (28) eines Probenträgers (26) mit chemischen und / oder biologischen Flüssigkeiten oder zur Abgabe dieser auf einen ebenen Objektträger, bei welchem ein Positionierschritt zur Positionierung einer Flüssigkeitsabgabevorrichtung (10) über einer ersten Vertiefung (28) oder über dem Objektträger durchgeführt wird, wobei die Flüssigkeitsabgabevorrichtung (10) eine Flüssigkeitskammer (12) aufweist, auf die zum Erzeugen der Tröpfchen (24) ein durch einen Impulsgeber (22) erzeugter Anregungsimpuls (34) einwirkt,

in einem Flüssigkeitsabgabeschritt mindestens eine Tröfpchenserie durchgeführt wird, wobei in einer Tröpfchenserie mehrere Tröpfchen (24) in die erste Vertiefung (28) oder auf den Objektträger abgegeben werden und

der Positionierschritt zur Positionierung der Flüssigkeitsabgabevorrichtung (10) über weiteren Vertiefungen (28) über dem Objektträger sowie der Flüssigkeitsabgabeschritt zur Abgabe mehrere Tröpfchen (24) in mindestens einer Tröpfchenserie in diese Vertiefung (28) oder auf den Objektträger mehrfach wiederholt wird

**gekennzeichnet durch**

einen am Ende der Tröpfchenserie von dem Impulsgeber (22) erzeugten Dämpfungsimpuls (38,46) zur Dämpfung des Nachschwingens der Flüssigkeitsabgabevorrichtung (10).

2. Verfahren nach Anspruch 1, bei welchem zu Beginn des Flüssigkeitsabgabeschrittes ein Vorimpuls (40) mit größerer Amplitude als der Anregungsimpuls (34) vor dem ersten Anregungsimpuls (34) vom Impulsgeber (22) erzeugt wird.

3. Verfahren zum Befüllen von Vertiefungen (28) eines Probenträgers (26) mit chemischen und / oder biologischen Flüssigkeiten oder zur Abgabe dieser auf einen ebenen Objektträger, bei welchem

ein Positionierschritt zur Positionierung einer Flüssigkeitsabgabevorrichtung (10) über einer ersten Vertiefung (28) oder über dem Objektträger durchgeführt wird, wobei die Flüssigkeitsabgabevorrichtung (10) eine Flüssigkeitskammer (12) aufweist, auf die zum Erzeugen der Tröpfchen (24) ein durch einen Impulsgeber (22) erzeugter Anregungsimpuls (34) einwirkt,

in einem Flüssigkeitsabgabeschritt mindestens eine Tröfpchenserie durchgeführt wird, wobei in einer Tröpfchenserie mehrere Tröpfchen (24) in die erste Vertiefung (28) oder auf den Objektträger abgegeben werden und

der Positionierschritt zur Positionierung der Flüssigkeitsabgabevorrichtung (10) über weiteren Vertiefungen (28) sowie der Flüssigkeitsabgabeschritt zur Abgabe mehrere Tröpfchen (24) in mindestens einer Tröpfchenserie in diese Vertiefung (28) oder auf den Objektträger mehrfach wiederholt wird

**gekennzeichnet durch**

einen zu Beginn der Tröpfchenserie vom Impulsgeber (22) erzeugten Vorimpuls (40), der vor dem ersten Anregungsimpuls abgegeben wird, wobei die Amplitude des Vorimpulses (40) größer ist als die des Anregungsimpulses (34).

4. Verfahren nach Anspruch 3, bei welchem am Ende des Flüssigkeitsabgabeschrittes vom Impulsgeber (22) ein Dämpfungsimpuls (38,46) zur Dämpfung des Nachschwingens der Flüssigkeitsabgabevorrichtung (10) erzeugt wird.

5. Verfahren nach Anspruch 1, 2 oder 4, bei welchem bei Betrieb in Resonanzfrequenz der Dämpfungsimpuls (46) durch die Phasenumkehr des Anregungsimpulses erzeugt wird.

6. Verfahren nach Anspruch 1, 2, 4 oder 5, bei welchem der Dämpfungsimpuls (46) im Wesentlichen nach der Abgabe des letzten zur Befüllung abgegebenen Tröpfchens (24) erzeugt wird.

7. Verfahren nach Anspruch 1, 2, 4, 5 oder 6, bei welchem der Dämpfungsimpuls (46) im Wesentlichen der momentanen Schwingung der Flüssigkeitsabgabevorrichtung entgegen wirkt.

8. Verfahren nach Anspruch 1, 2 oder 4-7, bei welchem die Amplitude des Dämpfungsimpulses (46) mindestens 20 %, vorzugsweise mindestens 30 % der Amplitude des Anregungsimpulses (44) beträgt.

9. Verfahren nach Anspruch 1, 2 oder 4-8, bei welchem die Dauer des Dämpfungsimpulses länger, vorzugsweise 3 bis 15 % und besonders bevorzugt 5 bis 10 % länger als die Dauer des Anregungsimpulses (44) ist.

10. Verfahren nach einem der Ansprüche 2-9, bei welchem die Amplitude des Vorimpulses (40) mindestens 20 %, vorzugsweise mindestens 50 % und besonders bevorzugt 50 bis 100 % größer als die Amplitude (A) des Anregungsimpulses (38) ist.

11. Verfahren nach einem der Ansprüche 2-10, bei welchem durch den Vorimpuls (40) das erste Tröpfchen abgegeben wird.

12. Verfahren nach einem der Ansprüche 1-11, bei welchem zur Befüllung der Vertiefung (28) mindestens 5, vorzugsweise mindestens 10 und besonders bevorzugt mindestens 20 Tröpfchen abgegeben werden.

13. Verfahren nach einem der Ansprüche 1-12, bei welchem die Flüssigkeitsabgabevorrichtung (10) bei Resonanzfrequenz betrieben wird.

14. Verfahren nach einem der Ansprüche 1-13, bei welchem die Flüssigkeitsabgabe durch eine in der Flüssigkeitsabgabevorrichtung (10) vorgesehene, mit der Flüssigkeitskammer (12) verbundene Kapillarkammer (18) erfolgt.

## Claims

1. Method for filling recesses (28) of a sample carrier (26) with chemical and/or biological liquids or for dispensing the same onto a planar object carrier, wherein
a positioning step is carried out to position a liquid dispensing device (10) above a first recess (28) or above the object carrier, said liquid dispensing device (10) comprising a liquid chamber (12) on which an excitation pulse (34) generated by a pulse generator (22) acts to form droplets (24),
at least one series of droplets is performed in a liquid dispensing step, wherein in one series of droplets a plurality of droplets (24) is dispensed into the first recess (28) or onto the object carrier, and
the positioning step for positioning the liquid dispensing device (10) above further recesses (28) or above the object carrier and the liquid dispensing step for dispensing a plurality of droplets (24) in at least one series of droplets into this recess (28) or onto the object carrier are repeated several times,
**characterized by**
a damping pulse (38, 46) generated by the pulse generator (22) at the end of the series of droplets to dampen the post-pulse oscillation of the liquid dispensing device (10).

2. Method of claim 1, wherein, at the beginning of the liquid dispensing step, a preimpulse (40) of an amplitude higher than that of the excitation pulse (34) is generated by the pulse generator (22) prior to the first excitation pulse (34).

3. Method for filling recesses (28) of a sample carrier (26) with chemical and/or biological liquids or for dispensing the same onto a planar object carrier, wherein
a positioning step is carried out to position a liquid dispensing device (10) above a first recess (28) or above the object carrier, said liquid dispensing device (10) comprising a liquid chamber (12) on which an excitation pulse (34) generated by a pulse generator (22) acts to form droplets (24),
at least one series of droplets is performed in a liquid dispensing step, wherein in one series of droplets a plurality of droplets (24) is dispensed into the first recess (28) or onto the object carrier, and
the positioning step for positioning the liquid dispensing device (10) above further recesses (28) and the liquid dispensing step for dispensing a plurality of droplets (24) in at least one series of droplets into this recess (28) or onto the object carrier are repeated several times,
**characterized by**
a preimpulse (40) of an amplitude higher than that of the excitation pulse (34) is generated by the pulse generator (22) at the beginning of the liquid dispensing step and prior to the first excitation pulse.

4. Method of claim 3, wherein, at the end of the liquid dispensing step, the pulse generator (22) generates a damping pulse (38, 46) to dampen the post-pulse oscillation of the liquid dispensing device (10).

5. Method of claim 1, 2 or 4, wherein, in resonant frequency operation mode, the damping pulse (46) is generated by the phase reversal of the excitation pulse.

6. Method of claim 1, 2, 4 or 5, wherein the damping pulse (46) is generated substantially after the dispensing of the last droplet (24) dispensed for filling.

7. Method of claim 1, 2, 4, 5 or 6, wherein the damping pulse (46) substantially counteracts the momentary oscillation of the liquid dispensing device.

8. Method of claim 1, 2 or 4-7, wherein the amplitude of the damping pulse (46) is at least 20%, preferably at least 30% of the amplitude of the excitation pulse (44).

9. Method of claim 1, 2 or 4-8, wherein the duration of the damping pulse is longer, preferably 3 to 15% and particularly preferred 5 to 10% longer, than the duration of the excitation pulse (44).

10. Method of one of claims 2-9, wherein the amplitude of the preimpulse (40) is at least 20%, preferably at least 50% and particularly preferred 50 to 100% higher than the amplitude (A) of the excitation pulse (38).

11. Method of one of claims 2-10, wherein the first droplet is dispensed by the preimpulse (40).

12. Method of one of claims 1-11, wherein at least 5, preferably at least 10 and particularly preferred at least 20 droplets are dispensed to fill the recess (28).

13. Method of one of claims 1-12, wherein the liquid dispensing device (10) is operated at resonant frequency.

14. Method of one of claims 1-13, wherein the dispensing of liquid is effected with a capillary chamber (18) provided in the liquid dispensing device (10) and connected with the liquid chamber (12).

## Revendications

1. Procédé de remplissage de creux (28) dans un porte-échantillons (26) avec des liquides chimiques et/ou biologiques ou de distribution desdits liquides sur un porte-objet plan, dans lequel

une étape de positionnement est réalisée pour positionner un dispositif de distribution de liquide (10) au-dessus d'un premier creux (28) ou au-dessus dudit porte-objet, le dispositif de distribution de liquide (10) comprenant une chambre de liquide (12) sur laquelle agit une impulsion d'excitation (34), générée par un générateur d'impulsion (22), pour produire des gouttelettes (24),

dans une étape de distribution de liquide, au moins une série de gouttelettes est réalisée, plusieurs gouttelettes (24) étant distribuées dans le premier creux (28) ou sur le porte-objet dans une série de gouttelettes, et

l'étape de positionnement pour positionner ledit dispositif (10) au-dessus d'autres creux (10) ou au-dessus du porte-objet ainsi que l'étape de distribution de liquide pour la distribution de plusieurs gouttelettes (24) dans au moins une série de gouttelettes dans ledit creux (28) ou sur ledit porte-objet sont répétées plusieurs fois,

**caractérisé par**

une impulsion d'affaiblissement (38, 46) générée par le générateur d'impulsion (22) à la fin de la série de gouttelettes, pour l'affaiblissement de l'oscillation après l'impulsion du dispositif de distribution de liquide (10)

2. Procédé selon la revendication 1, dans lequel au commencement de l'étape de distribution de liquide, le générateur d'impulsion (22) génère une pré-impulsion (40) avant la première impulsion d'excitation (34), l'amplitude de ladite pré-impulsion étant plus grande que celle de l'impulsion d'excitation (34).

3. Procédé de remplissage de creux (28) dans un porte-échantillons (26) avec des liquides chimiques et/ou biologiques ou de distribution desdits liquides sur un porte-objet plan, dans lequel

une étape de positionnement est réalisée pour positionner un dispositif de distribution de liquide (10) au-dessus d'un premier creux (28) ou au-dessus dudit porte-objet, le dispositif de distribution de liquide (10) comprenant une chambre de liquide (12) sur laquelle agit une impulsion d'excitation (34), générée par un générateur d'impulsion (22), pour produire des gouttelettes (24),

dans une étape de distribution de liquide, au moins une série de gouttelettes est réalisée, plusieurs gouttelettes (24) étant distribuées dans le premier creux (28) ou sur le porte-objet dans une série de gouttelettes, et

l'étape de positionnement pour positionner ledit dispositif (10) au-dessus d'autres creux (10) ou au-dessus du porte-objet ainsi que l'étape de distribution de liquide pour la distribution de plusieurs gouttelettes (24) dans au moins une série de gouttelettes dans ledit creux (28) ou sur ledit porte-objet sont répétées plusieurs fois,

**caractérisé par**

une pré-impulsion (40) générée par le générateur d'impulsion (22) au commencement de l'étape de distribution de liquide avant la première impulsion d'excitation, l'amplitude de ladite pré-impulsion (40) étant plus grande que celle de l'impulsion d'excitation (34).

4. Procédé selon la revendication 3, dans lequel, à la fin de l'étape de distribution de liquide, le générateur d'impulsion (22) génère une impulsion d'affaiblissement (38, 46) pour l'affaiblissement de l'oscillation après l'impulsion du dispositif de distribution de liquide (10).

5. Procédé selon la revendication 1, 2 ou 4, dans lequel, en cas de l'opération sous fréquence de résonance, l'impulsion d'affaiblissement (46) est générée par l'inversion des phases de l'impulsion d'excitation.

6. Procédé selon la revendication 1, 2, 4 ou 5, dans lequel l'impulsion d'affaiblissement (46) est générée sensiblement après la distribution de la dernière gouttelette (24) distribuée pour la remplissage.

7. Procédé selon la revendication 1, 2, 4, 5 ou 6, dans lequel l'impulsion d'affaiblissement (46) s'oppose sensiblement à l'oscillation momentanée du dispositif de distribution de liquide.

8. Procédé selon la revendication 1, 2 ou 4-7, dans lequel l'amplitude de l'impulsion d'affaiblissement (46) est au moins 20%, de préférence au moins 30% de l'amplitude de l'impulsion d'excitation (44).

9. Procédé selon la revendication 1, 2 et 4-8, dans lequel la durée de l'impulsion d'affaiblissement est plus longue, de préférence 3 à 15% et, particulièrement préféré, 5 à 10% plus longue que la durée de l'impulsion d'excitation (44).

10. Procédé selon l'une quelconque des revendications 2-9, dans lequel l'amplitude de la préimpulsion (40) est plus grande par au moins 20%, de préférence au moins 50% et, particulièrement préféré, au moins 50 à 100% plus grande que l'amplitude (A) de l'impulsion d'excitation (38).

11. Procédé selon l'une quelconque des revendications 2-10, dans lequel la première gouttelette est distribuée par la préimpulsion (40).

12. Procédé selon l'une quelconque des revendications 1-11, dans lequel au moins 5, de préférence au moins 10 et, particulièrement préféré, au moins 20 gouttelettes sont distribuées pour remplir le creux (28).

**EP 1 587 627 B1**

**13.** Procédé selon l'une quelconque des revendications 1-12, dans lequel le dispositif de distribution de liquide (10) est opéré à fréquence de résonance.

**14.** Procédé selon l'une quelconque des revendications 1-13, dans lequel la distribution de liquide est effectuée par une chambre capillaire (18) prévue dans le dispositif de distribution de liquide (10) et en communication avec la chambre de liquide (12).

Fig.1

Fig.2

Fig.3

Fig.4

Fig.5